# EUROPEAN PATENT APPLICATION

(11) **EP 1 983 440 A1**
(43) Date of publication of application: **22.10.2008**
(21) Application number: 08154676.4
(22) Date of filing: 17.04.2008
(51) Int. Cl.: G06F 12/14, G06F 21/00, H04N 1/44, H04N 1/32

(54) **Image forming apparatus storing encrypted data on hard disk**

(30) Priority: 19.04.2007 JP 2007110755
(71) Applicant: Oki Data Corporation, Tokyo 108-8551 (JP)
(72) Inventor: Ozawa, Hisashi, Tokyo 108-8551 (JP)
(74) Representative: Pisani, Diana Jean

(57) **Abstract**

An image forming apparatus is supplied capable of preventing data stored on a hard disk from being read out when the hard disk is stolen. In the image forming apparatus, an encryption function section of encryption/decryption function section encrypts a print job received from an information processing apparatus, and stores it on the hard disk; and a decryption function section of the encryption/decryption function section decrypts the print job encrypted by the encryption function section and stored on the hard disk, and outputs it.

## Description

### BACKGROUND OF THE INVENTION

### Field of the Invention

The invention relates to an image forming apparatus comprising non-volatility memory with large capability.

### Related Background Art

In recent years, a kind of image forming apparatus comprising non-volatility memory with large capability such as hard disk is popularized. In such image forming apparatus, when temporarily storing print data received from external into the non-volatility memory with large capability, the confidentiality of the print data is requested to keep. In conventional technology (refer to patent document 1), stationary data is overwritten onto the store region from which the print data temporarily stored in the non-volatility memory with large capability is read out, parallel to an image changing process; further, random number data is overwritten onto the store region.

Patent document 1: Japan patent publication 2006-347100.

However, in the conventional technology, in the case that the non-volatility memory with large capability, for example, HDD (Hard Disk) is burgled, there is a problem that the data stored in the HDD is read out.

### SUMMARY OF THE INVENTION

It is, therefore, an object of the invention to provide an image forming apparatus capable of solving the above problem.

According to the present invention, there is provided an image forming apparatus which has a non-volatility memory to store either of print data received from a host apparatus and print data made inside the image forming apparatus and comprises an encrypting section that encrypts the print data; and a decrypting section that decrypts the print data encrypted by the encrypting section, wherein the non-volatility memory stores the print data encrypted by the encrypting section, the decrypting section decrypts the print data which is read out from the non-volatility memory.

Moreover, the image forming apparatus may further comprise an encryption key generating section that generates an encryption key which is used not only by the encrypting section to encrypt the print data but also by the decrypting section to decrypt the encrypted print data, on the basis of a predetermined information; and an encryption key setting section that sets the encryption key generated by the encryption key generating section to the encrypting section and the decrypting section.

Moreover, in the image forming apparatus, the predetermined information may be random number information generated on the basis of a stationary number of the non-volatility memory.

Moreover, the image forming apparatus may further comprise a memory identifying section that confirms a proper performance of the non-volatility memory.

### The effect of the present invention:

According to the present invention, because the non-volatility memory stores the print data encrypted by an encrypting section, and a decrypting section decrypts the encrypted print data read out from the non-volatility memory, further an encryption key used in encryption or decryption is not stored in the HDD, even if the HDD is burgled, it is impossible to obtain the same encryption key. Therefore, it is possible to prevent a leakage of the data.

The above and other objects and features of the present invention will become apparent from the following detailed description and the appended claims with reference to the accompanying drawings.

### BRIEF DSCRIPTION OF THE DRAWINGS

Fig. 1 is a block diagram of an image forming apparatus in embodiment 1 of the present invention;
Fig. 2 is a flowchart showing initializing operation of an image forming apparatus in embodiment 1 of the present invention;
Fig. 3 is a flowchart showing initializing operation of an encryption HDD in embodiment 1 of the present invention;
Fig. 4 is a block diagram of an image forming apparatus in embodiment 2 of the present invention; and
Fig. 5 is a flowchart showing initializing operation of an encryption HDD in embodiment 2 of the present invention.

### DETAILED DESCRIPTION OF THE PREFERRED EMBODIMENTS

Embodiments of the invention will be described in detail hereinbelow with reference to the drawings.

### <Embodiment 1>

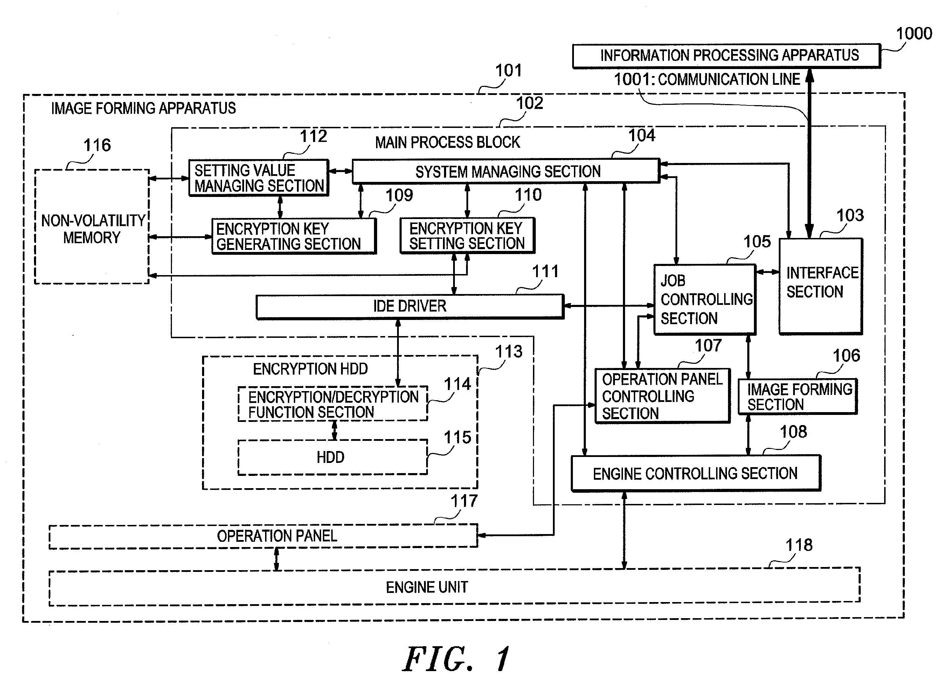

Fig. 1 is a block diagram of an image forming apparatus in embodiment 1 of the present invention.

As shown by the Fig. 1, an image forming apparatus 101 in embodiment 1 comprises a main process block 102, an encryption HDD 113, a non-volatility memory 116, an operation panel 117 and an engine unit 118 according to a big division. Here, as an example of the image forming apparatus 101, a printer is shown. Moreover, in a using state, the image forming apparatus 101 is connected with an information processing apparatus 1000 to communicate via a communication line 1001. The following is to explain in detail a structure of the image forming apparatus 101.

The main process block 102 is a block to receive print job from the information processing apparatus 1000 via the communication line 1001 composed of network, USB interface, IEEE1284 interface and the like; make raster data and transmit the raster data to the engine unit 118. Here, the information processing apparatus 1000 is a host apparatus to generate the print job. In general, it is a personal computer.

The main process block 102 includes an interface section 103, a system managing section 104, a job controlling section 105, an image forming section 106, an operation panel controlling section 107, an engine controlling section 108, an encryption key generating section 109, an encryption key setting section 110, an IDE driver 111 and a setting value managing section 112; and is connected with the non-volatility memory 116, the encryption HDD 113, the operation panel 117 and the engine unit 118.

The interface section 103 connects with the communication line 1001 composed of network, USB interface, IEEE1284 interface and the like to perform receiving and transmission of data with the information processing apparatus 1000.

The system managing section 104 is a part to manage status of the image forming apparatus 101. That is, the system managing section 104 connects with the interface section 103, the job controlling section 105, the operation panel controlling section 107, the engine controlling section 108, the encryption key generating section 109, the encryption key setting section 110 and the setting value managing section 112; obtains status change such as error and the like from respective connected sections; and performs respective notifications of contact of status toward the respective sections, interruption instruction of process, restart instruction of process, stop instruction of process and the like, according to the status change. Further, the system managing section 104 instructs the operation panel controlling section 107 to perform status display of printer.

The job controlling section 105 is a part to analyze the print job received from the interface section 103, and send predetermined print job to the encryption HDD 113 via the IDE driver 111 so as to make the encryption HDD 113 store the predetermined print job, according to an analysis result. The job controlling section 105 also is a part to send the predetermined print job to the image forming section 106 so as to make the image forming section 106 make raster data, according to the analysis result. Further, the job controlling section 105 also is a part to make the encryption HDD 113 store the predetermined raster data made by the image forming section 106 via the IDE driver 111. Furthermore, in the case that user operates the operation panel 117 and performs a print instruction of print job stored in the encryption HDD 113, the job controlling section 105 also is a part to read out the corresponding print job from the encryption HDD 113 via the IDE driver 111, send the print job to the image forming section 106, and instruct the image forming section 106 to make raster data.

The image forming section 106 is a part to edit and expand the print job, and make raster data. That is, the image forming section 106 is a part to edit and expand the print job received from the connected the job controlling section 105 so as to make raster data, and send the raster data to the connected engine controlling section 108.

The operation panel controlling section 107 is a part to control the operation panel 117 to display the status managed by the system managing section 104, obtain button press information of the operation panel 117, and send the button press information to the system managing section 104.

The engine controlling section 108 is a part to communicate with the engine unit 118, send the raster data received from the image forming section 106 to the engine unit 118, and control operation of the engine unit 118.

The encryption key generating section 109 is a part to be connected with the setting value managing section 112, obtain information such as printer serial number and the like stored in the non-volatility memory 116, and generate an encryption key on the basis of the printer serial number through performing a predetermined calculation, in order to generate connatural identification information which is difficultly anticipated. For example, through performing a calculation of random number generation based on the printer serial number, the encryption key generating section 109 generates the connatural identification information which is difficultly anticipated.

The encryption key setting section 110 is a part to set the encryption key generated by the encryption key generating section 109 to the encryption HDD 113. Further, the encryption key setting section 110 also is a part to verify whether the encryption HDD 113 correctly accepted the encryption key.

The IDE driver 111 is a part to communicate with the encryption HDD 113, perform an initialization of the encryption HDD 113, and perform a reading and writing process of data with respect to a HDD 115 to construct the encryption HDD 113.

The setting value managing section 112 is a part to perform an initialization of the non-volatility memory 116. Further, the setting value managing section 112 also is a part to read out the printer serial number from the non-volatility memory 116 and send the printer serial number to the encryption key generating section 109.

The encryption HDD 113 is a part which has an encryption/decryption function section 114 and a HDD 115, is constructed as a set of security kit, and is removably installed on the 6101. In the present invention, there is an objective to prevent the data stored in the HDD 115 from being read out when the encryption HDD 113 or only the HDD 115 is burgled.

The encryption/decryption function section 114 is an encryption board and is a part to receive the encryption key from the connected IDE driver 111 and perform encryption/decryption of predetermined data by using the encryption key. That is, the encryption/decryption function section 114 is a part which receives a writing instruction of data from the IDE driver 111; then, uses the encryption key to encrypt the received print job or raster data; and writes the encrypted print job or the encrypted raster data to the HDD 115. Further, the encryption/decryption function section 114 is a part which receives a reading instruction of data from the IDE driver 111; then, uses the encryption key to decrypt data read out from the HDD 115; and sends the data to the IDE driver 111.

The HDD 115 is a hard disk to store the predetermined print job or the predetermined raster data encrypted by the encryption/decryption function section 114. In addition, in the HDD 115, it is not to store all of print job or raster data, but only store the predetermined print job or the predetermined raster data decided on the basis of control information and the like contained in the print job.

The non-volatility memory 116 is a memory to previously memorize control program and control data for starting/generating respective functional blocks to construct the main process block 102 through that a CPU (Center Process Unit, not shown) performs an execution using RAM (Random Access Memory, not shown). Further, the non-volatility memory 116 also is a memory to previously memorize control program and control data for controlling whole image forming apparatus 101 through that the CPU (not shown) performs an execution using RAM (not shown). Furthermore, the non-volatility memory 116 also is a memory to previously memorize information such as printer serial number and the like used while generating random number. In general, the non-volatility memory 116 is composed of flash memory or the like.

The operation panel 117 is an operation board to display status managed by the system managing section 104 on the basis of the control of the operation panel controlling section 107, and is a part to perform an action of man-machine interface between the image forming apparatus 101 and user. The operation panel 117 includes button for making user operate menu and the like, and LED lamp for displaying status and the like.

The engine unit 118 is an unit to receive raster data from the main process block 102 on the basis of the intention of user via the control of the engine controlling section 108 and the operation panel 117, and perform a print output.

The image forming apparatus 101 explained above performs the following operations.

First is to explain a flow of initialization process of the image forming apparatus 101, second is to explain operations of encryption generation and encryption key setting.

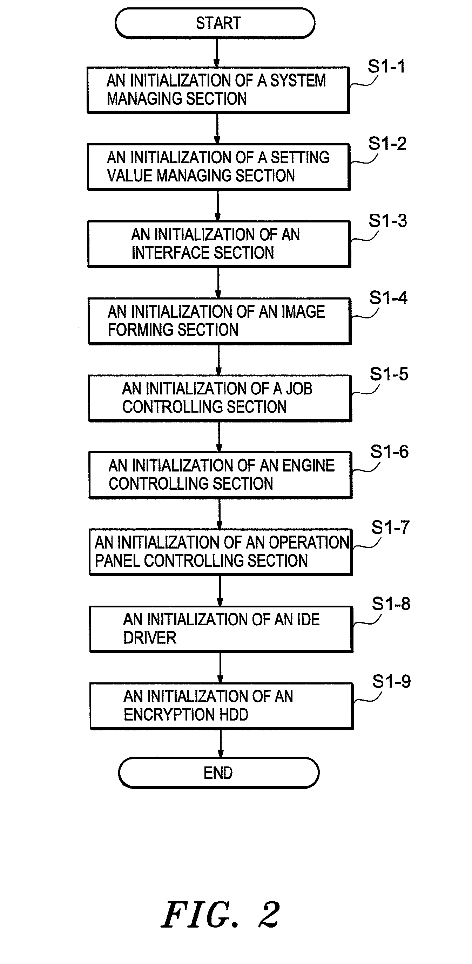

Fig. 2 is a flowchart showing initializing operation of an image forming apparatus in embodiment 1 of the present invention.

According to a step order from step S1-1 to step S1-9 in the flowchart, a flow of initialization of the image forming apparatus 101 is explained.

### Step S1-1:

When user turns on a power source switch (not shown), the power source is supplied to respective sections in the apparatus and a resetting signal happens. Then, when the resetting signal is inputted, the system managing section 104 (Fig. 1) performs an initialization of itself and outputs an initialization signal.

### Step S1-2:

The setting value managing section 112 (Fig. 1) performs an initialization of itself according to the initialization signal of the system managing section 104.

### Step S1-3:

The interface section 103 (Fig. 1) performs an initialization of itself according to the initialization signal of the system managing section 104.

### Step S1-4:

The image forming section 106 (Fig. 1) performs an initialization of itself according to the initialization signal of the system managing section 104.

### Step S1-5:

The job controlling section 105 (Fig. 1) performs an initialization of itself according to the initialization signal of the system managing section 104.

### Step S1-6:

The engine unit 118 (Fig. 1) performs an initialization of itself according to the initialization signal of the system managing section 104.

### Step S1-7:

The operation panel 117 (Fig. 1) performs an initialization of itself according to the initialization signal of the system managing section 104.

### Step S1-8:

The IDE driver 111 (Fig. 1) performs an initialization of itself according to the initialization signal of the system managing section 104.

### Step S1-9:

The encryption HDD 113 (Fig. 1) performs an initialization of itself according to the initialization signal of the system managing section 104.

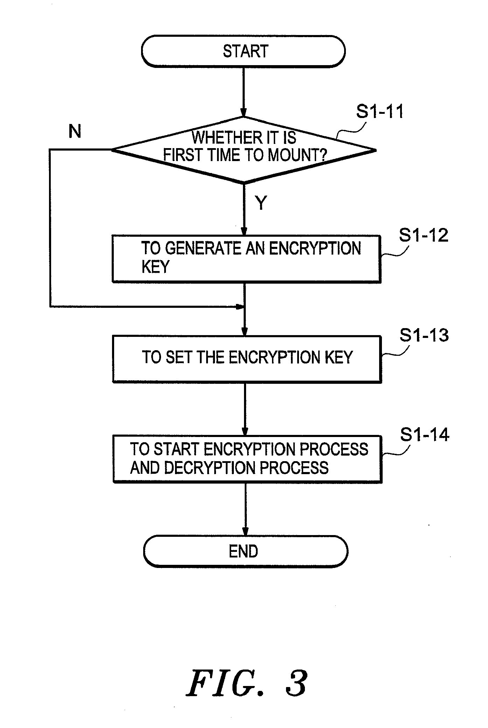

Fig. 3 is a flowchart showing initializing operation of an encryption HDD in embodiment 1 of the present invention.

According to a step order from step S1-11 to step S1-14 in the flowchart, a flow of initialization of the encryption HDD 113 is explained.

### Step S1-11:

The encryption key generating section 109 (Fig. 1) performs an initialization of itself according to the initialization signal of the system managing section 104; gets the printer serial number from the non-volatility memory 116 (Fig. 1) via the setting value managing section 112 (Fig. 1); confirms whether the gotten printer serial number is a value of default (for example, all of numerical values are "0".) or not; if the gotten printer serial number is a value of default, judges that this time is first time to turn on the power source after mounted the encryption HDD 113, and enters step 1-12; and if the gotten printer serial number is not a value of default, judges that this time is second time or over to turn on the power source after mounted the encryption HDD 113, and enters step 1-13.

### Step S1-12:

The encryption key generating section 109 (Fig. 1) makes random number happen on the basis of the gotten printer serial number; generates an encryption key and stores the encryption key into the non-volatility memory 116.

### Step S1-13:

The encryption key setting section 110 (Fig. 1) performs an initialization of itself; and reads out the encryption key from the non-volatility memory 116 (Fig. 1). Further, the encryption key setting section 110 (Fig. 1) sends the encryption key to the encryption/decryption function section 114 (Fig. 1) via the IDE driver 111 (Fig. 1).

### Step S1-14:

The encryption/decryption function section 114 (Fig. 1) performs an initialization of itself, a setting of the received encryption key, and an initialization of the HDD 115. Then, the encryption/decryption function section 114 reads/writes data from the HDD 115 by using the set encryption key.

As explained above, according to the embodiment 1, when the power source switch of the image forming apparatus is turned on, all of sections are initialized. Afterward, the encryption key is read out from the non-volatility memory, and all data stored in the HDD are encrypted by using the encryption key and stored again. Thereby, even if the HDD is stolen, in the case that the same encryption key as that stored in the non-volatility memory is not obtained, the data can not be read out. As a result, it is possible to prevent a leakage of data.

Moreover, in the above explanation, once the encryption key is generated, the encryption key is stored in the non-volatility memory. Afterward, the encryption key is used to encrypt all data stored in the HDD, and the encrypted data is stored again in the HDD. Further, the encrypted data stored in the HDD is decrypted by using the encryption key and is outputted. However, the present invention is not limited by the embodiment. That is, it is possible to newly generate an encryption key whenever user turns on the power source switch of the image forming apparatus, and use the same encryption key to read and write all data till the power source switch of the image forming apparatus is turned off. In the case, it should be note that the stored data will become invalid after the power source switch of the image forming apparatus is turned off.

### <Embodiment 2>

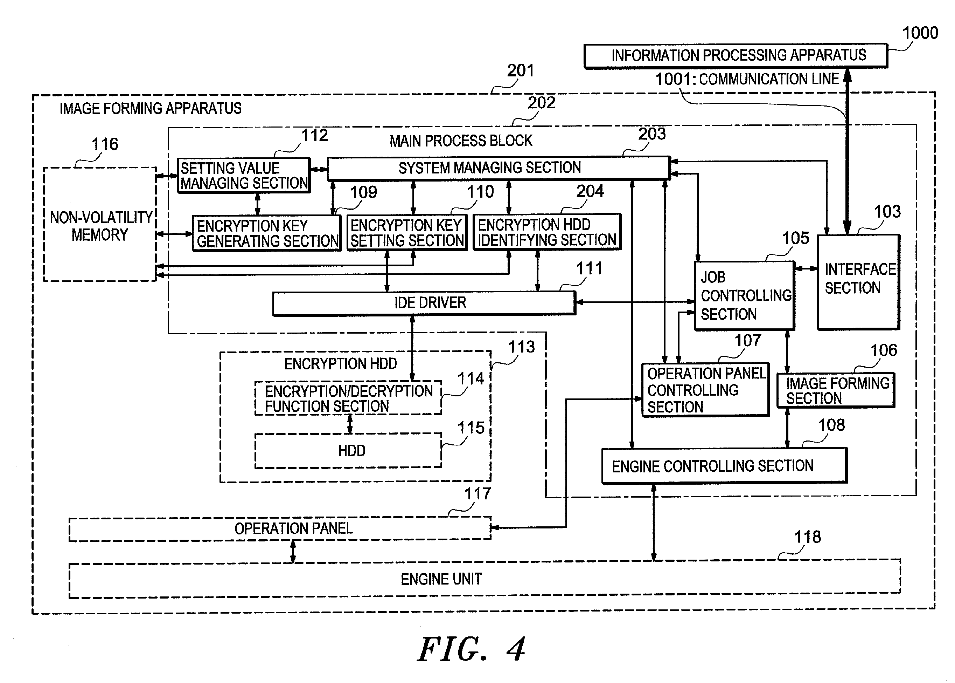

Fig. 4 is a block diagram of an image forming apparatus in embodiment 2 of the present invention.

As shown by the Fig. 4, an image forming apparatus 201 in embodiment 2 comprises a main process block 202, an encryption HDD 113, a non-volatility memory 116, an operation panel 117 and an engine unit 118 according to a big division. Here, as an example of the image forming apparatus 201, a printer is shown. Moreover, in a using state, the image forming apparatus 201 is connected with an information processing apparatus 1000 to communicate via a communication line 1001. The following is only to explain in detail part different from the image forming apparatus 101 in embodiment 1. Regarding the same section, it will be assigned the same symbol as that in embodiment 1.

As shown in the Fig. 4, the part different from the embodiment 1 is that an encryption HDD identifying section 204 is added into the main process block 202 of the image forming apparatus 201.

The encryption HDD identifying section 204 is connected with the IDE driver 111 and the non-volatility memory 116, and the encryption HDD identifying section 204 is a part to perform a check of proper performance of the mounted encryption HDD 113 while initializing. Further, the encryption HDD identifying section 204 also is connected with a system managing section 203, and the encryption HDD identifying section 204 also is a part to perform a notification that an improper state is detected to the system managing section 203 in the case that an improper state of the encryption HDD 113 is detected. Thus, the system managing section 203 may notify the respective sections to stop process and stop print operation.

The image forming apparatus 201 in embodiment 2 explained above performs the following operations.

Regarding a flow of initialization process of the image forming apparatus 201, because it is the same as that in embodiment 1, it is omitted. The following is only to explain operations of encryption generation and encryption key setting.

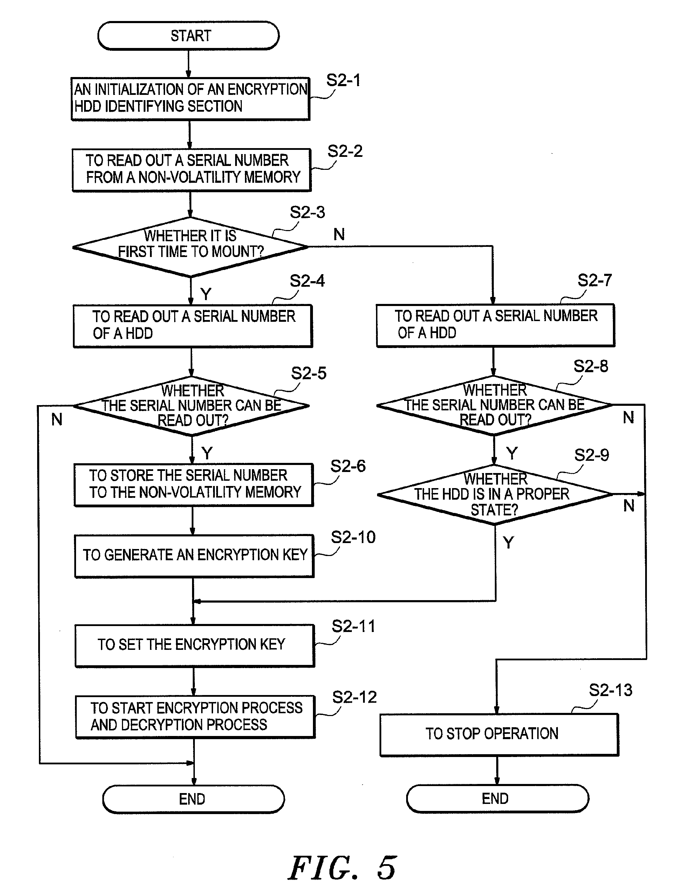

Fig. 5 is a flowchart showing initializing operation of an encryption HDD in embodiment 2 of the present invention.

According to a step order from step S2-1 to step S2-13 in the flowchart, a flow of initialization of encryption HDD is explained. Here, it is set that the initialization process of the image forming apparatus has been finished.

### Step S2-1:

The encryption HDD identifying section 204 (Fig. 4) performs an initialization of itself according to the initialization signal of the system managing section 203.

### Step S2-2:

The encryption HDD identifying section 204 (Fig. 4) gets a serial number of the HDD 115 (Fig. 4) from the non-volatility memory 116 (Fig. 4).

### Step S2-3:

The encryption HDD identifying section 204 (Fig. 4) confirms whether the gotten serial number is a value of default (for example, all of numerical values are "0".) or not; if the gotten serial number is a value of default, judges that this time is first time to turn on the power source after mounted the encryption HDD 113, and enters step 2-4; and if the gotten serial number is not a value of default, judges that this time is second time or over to turn on the power source after mounted the encryption HDD 113, and enters step 2-7.

### Step S2-4:

The encryption HDD identifying section 204 (Fig. 4) reads out the serial number from the HDD 115 (Fig. 4) of the encryption HDD 113 (Fig. 4).

### Step S2-5:

The encryption HDD identifying section 204 (Fig. 4) confirms whether the serial number can be read out from the HDD 115 (Fig. 4) or not; if it can be read out, enters step S2-6; and if it can not be read out, ends the flow.

### Step S2-6:

The encryption HDD identifying section 204 (Fig. 4) stores the serial number into the non-volatility memory 116 (Fig. 4).

### Step S2-7:

The encryption HDD identifying section 204 (Fig. 4) reads out the serial number of the HDD 115 (Fig. 4) of the encryption HDD 113 (Fig. 4) via the IDE driver 111 (Fig. 4).

### Step S2-8:

The encryption HDD identifying section 204 (Fig. 4) confirms whether the serial number can be read out from the HDD 115 (Fig. 4) or not; if it can be read out, enters step S2-9; and if it can not be read out, enters step S2-13.

### Step S2-9:

The encryption HDD identifying section 204 (Fig. 4) compares the serial number which is read out with the serial number stored in the non-volatility memory 116; if they are the same, judges that the HDD 115 (Fig. 4) is in a proper state and enters step S2-11; and if they are different, enters step S2-13.

### Step S2-10:

The encryption key generating section 109 (Fig. 4) performs an initialization of itself; gets a printer serial number from the setting value managing section 112 (Fig. 4); makes random number happen on the basis of the gotten printer serial number; generates an encryption key and stores the encryption key into the non-volatility memory 116 (Fig. 4).

### Step S2-11:

The encryption key setting section 110 (Fig. 4) performs an initialization of itself; and reads out the encryption key from the non-volatility memory 116 (Fig. 4). Further, the encryption key setting section 110 (Fig. 4) sends the encryption key to the encryption/decryption function section 114 (Fig. 4) via the IDE driver 111 (Fig. 4).

### Step S2-12:

The encryption/decryption function section 114 (Fig. 4) performs an initialization of itself, a setting of the received encryption key, and an initialization of the HDD 115. Then, the encryption/decryption function section 114 reads/writes data from the HDD 115 by using the set encryption key.

### Step S2-13:

The system managing section 203 (Fig. 4) notifies the connected respective sections to stop process and stops operation of printer so as to stop the flow.

As explained above, according to the embodiment 2, it is possible to detect that the encryption HDD is removed or is replaced by other encryption HDD. As a result, it is possible to improve security.
The utilization possibility in industry:

In the above stated explanation, only such case is explained that the present invention is applied to a printer. However, the present invention is not limited in this case, the present invention also can be applied to various devices such as scanner, copying apparatus, facsimile apparatus, multiplex apparatus having two functions or over and the like.

The present invention is not limited to the foregoing embodiments but many modifications and variations are possible within the spirit and scope of the appended claims of the invention.

## Claims

1. An image forming apparatus which has a non-volatility memory to store either of print data received from a host apparatus and print data made inside the image forming apparatus, comprising:
an encrypting section that encrypts the print data; and
a decrypting section that decrypts the print data encrypted by the encrypting section,
wherein the non-volatility memory stores the print data encrypted by the encrypting section, the decrypting section decrypts the print data which is read out from the non-volatility memory.

2. The image forming apparatus according to claim 1, further comprising:
a memory identifying section that confirms a proper performance of the non-volatility memory.

3. The image forming apparatus according to claim 1, further comprising:
an encryption key generating section that generates an encryption key which is used not only by the encrypting section to encrypt the print data but also by the decrypting section to decrypt the encrypted print data, on the basis of a predetermined information; and
an encryption key setting section that sets the encryption key generated by the encryption key generating section to the encrypting section and the decrypting section.

4. The image forming apparatus according to claim 3, further comprising:
a memory identifying section that confirms a proper performance of the non-volatility memory.

5. The image forming apparatus according to claim 3,
wherein the predetermined information is random number information generated on the basis of a stationary number of the non-volatility memory.

6. The image forming apparatus according to claim 5, further comprising:
a memory identifying section that confirms a proper performance of the non-volatility memory.
